(19) Europäisches Patentamt
European Patent Office
Office européen des brevets

(11) Publication number : 0 532 708 B1

(12) # EUROPEAN PATENT SPECIFICATION

(45) Date of publication of patent specification : **20.07.94 Bulletin 94/29**

(51) Int. Cl.$^5$ : **C08J 3/24,** C08G 61/12, C08G 65/40

(21) Application number : **91915821.2**

(22) Date of filing : **31.05.91**

(86) International application number : **PCT/US91/03652**

(87) International publication number : **WO 91/19752 26.12.91 Gazette 91/29**

(54) **CROSSLINKING OF POLYMERS CONTAINING DIARYL KETONES AND THE CROSSLINKED POLYMERS.**

(30) Priority : **04.06.90 US 532415**

(43) Date of publication of application : **24.03.93 Bulletin 93/12**

(45) Publication of the grant of the patent : **20.07.94 Bulletin 94/29**

(84) Designated Contracting States : **DE FR GB IT**

(56) References cited :
**US-A- 4 897 307**
**US-A- 4 987 206**

(73) Proprietor : **E.I. DU PONT DE NEMOURS AND COMPANY**
**1007 Market Street**
**Wilmington Delaware 19898 (US)**

(72) Inventor : **DAVID, Israel, A.**
**1418 Drake Road**
**Wilmington, DE 19803 (US)**

(74) Representative : **Abitz, Walter, Dr.-Ing. et al**
**Patentanwälte Abitz & Partner**
**Postfach 86 01 09**
**D-81628 München (DE)**

**EP 0 532 708 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### FIELD OF INVENTION

This invention relates to a process for the crosslinking of polymers containing diaryl ketones by reacting the polymers with alcohols and/or alkoxides and to the products of such process. Such crosslinked polymers have improved properties, such as chemical resistance.

### BACKGROUND OF THE INVENTION

It is known in the art that the crosslinking of polymers can improve certain physical properties, such as chemical and solvent resistance, and retention of shape at high temperatures. It is the object of this invention to provide a convenient method for crosslinking polymers containing diaryl ketones, so as to improve such physical properties.

### SUMMARY OF THE INVENTION

This invention concerns a process for crosslinking a diaryl ketone containing polymer, comprising,

an optional first step of contacting a diaryl ketone containing polymer with an alcohol and/or alkoxide, at a first temperature of about 50°C to about 200°C; and

a second step of heating said diaryl ketone containing polymer at a second temperature of about 200°C or more, or contacting said polymer with a strong dehydrating acid;

provided that:

said first and said second temperatures are about or above the glass transition temperature of said polymer;

when alkoxide is not present, said first temperature is about 150°C to about 200°C;

when said strong acid is used in said second step, said first step must be carried out; and

when said second step is carried out in the absence of said acid, and said optional first step has not been performed, said second step must be done with said polymer contacting said alcohol and/or said alkoxide.

This invention also relates to the products of said process.

### DETAILS OF THE INVENTION

The polymers useful in the present invention are those that contain diaryl ketones. By diaryl ketone is meant a group that has a carbonyl group in which the carbon of the carbonyl group is bound directly to two carbon atoms that are part of aromatic rings. For example, the simplest (monomeric) diaryl ketone is benzophenone, diphenyl ketone. The ketone group may be part of the main chain of the polymer or may be a pendant group. Preferred polymers for this process are poly(etherketoneketone), hereinafter PEKK, and poly(etheretherketone), hereinafter PEEK. The repeat units of these polymers are shown below.

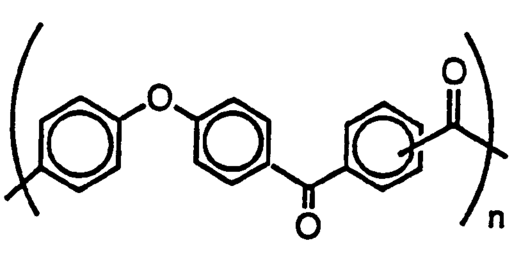

PEKK

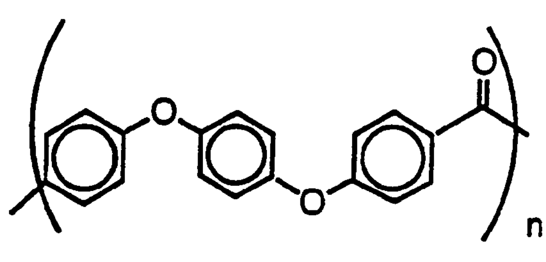

PEEK

The diaryl ketone containing polymers may contain any substituents that do not react with the other compounds used in the process. The polymers, whether substituted or not, must be substantially stable at the temperatures at which the process is run.

Any primary or secondary alcohol or alkoxide may be used in the first and/or second steps of the process. The alcohol or alkoxide must be substantially stable at the temperature at which the process is run, although

small amounts of dehydration are acceptable. Primary alcohols or alkoxides are preferred. It is preferred if the alcohol or alkoxide is polyfunctional, that is contains two or more hydroxyl groups. It is especially preferred if the alcohol is a glycol, that is contains two hydroxyl groups.

If alkoxide is present, a combination of alkoxide and alcohol (alkoxide dissolved in alcohol) will usually be used, since many alkoxides are solids (see also swelling agents, infra). The alkoxide can be formed in situ, as by the reaction of an alkali metal hydroxide, hydride or amide with the alcohol. In preferred alkoxides, the cation is an alkali metal or aluminum.

The ratio of alcohol (plus alkoxide, if present) to polymer in the first step is about 0.05 to about 1 and in the second step is about 0.0001 to about 1 equivalents of alcohol per gram of polymer, preferably about 0.0002 to about 0,5 equivalents of alcohol per gram of polymer in the second step. An equivalent of alcohol (or alkoxide) is the equivalents of hydroxyl groups, including alkoxide. In order to effect crosslinking, it is desirable to maintain the amount of alcohol or alkoxide in actual contact with the polymer to a minimum. The alcohol may be contacted with the polymer as a liquid or vapor. At higher temperatures lower boiling alcohols may be present as vapors, or a pressure vessel may be used to confine the vapor or keep them liquids.

Alcohols (and their derived alkoxides) useful in the process include, but are not limited to, methanol, ethanol, n-propanol, i-propanol, n-butanol, 2-butanol, 2-methyl-1-propanol, xylylene glycol (o-, m- and p-isomers), neopentyl alcohol, 1-heptanol, ethylene glycol, benzyl alcohol, 1,4-butanediol, propylene glycol, penterythritol, trimethylol propane, 1,3-propanediol, 1,5-pentanediol, 1,6-hexanediol, and cyclohexanedimethanol, and 2,2-dimethyl-1,3-propanediol.

The strong dehydrating acid is a concentrated acid that has a tendency to dehydrate organic compounds such as alcohols. Such acids are well known to those skilled in the art. Preferred strong dehydrating acids are sulfuric acid, phosphoric acid, polyphosphoric acid, p-toluenesulfonic acid, methanesulfonic acid, trifluoromethanesulfonic acid, and the like. Sulfuric acid is especially preferred. These acids are usually used from about ambient temperature to about 100°C.

The optional first step of the reaction is carried out at about 50°C to about 200°C, and above the glass transition temperature of the polymer. The glass transition temperature of a polymer is a property well known to those skilled in the art, and the value for any particular polymer can be found in the literature or measured by well known techniques, such as differential scanning calorimetry. If the glass transition temperature of the polymer is above about 200°C the first step cannot be done separately. If there is no alkoxide present in the first step, higher temperatures, about 150°C to about 200°C must be employed.

The second step of the process, when carried out in the absence of an acid, and when the first step has been carried out, may merely involve heating of the polymer to a temperature over about 200°C and about or higher than the glass transition temperature of the polymer. If no acid is present and the first step has not been carried out, then alcohol and/or alkoxide must contact the polymer in the second step. The alcohols and alkoxides discussed above are applicable. For the second step carried out in the absence of acid, it is preferred that the temperature is about 230°C to about 350°C. Typically the amount of time needed to carry out the second step in the absence of acid is inversely proportional to the temperature. Although it will vary somewhat depending on the process ingredients, typical times for the second step are 1 hr at 250°C, 30 min at 300°C and 15 min at 350°C.

It will be understood by those skilled in the art, that the polymer will be crosslinked at the surface, unless the alcohol/alkoxide and acid (if used) is able to penetrate into the polymer during the process. Thus alcohols that can swell the polymer will typically crosslink not only the surface of the polymer but somewhat below the surface, the exact amount of penetration below the surface being determined by the ability of the alcohol to swell the polymer. There will usually be a "crosslink gradient" wherein the surface is more highly crosslinked than the interior of the polymer pieces. Another determining factor as to whether some crosslinking will occur throughout the polymer is the thicknesses of the polymer pieces, thicker pieces being less likely to be crosslinked in the center of the piece.

In order to assist in crosslinking the polymer below the surface, especially if the alcohol/alkoxide does not swell the polymer well, it is advantageous to add to the process (first and second steps) a swelling agent which swells the polymer. Such agents must of course be substantially stable at the temperature of the process and not react with any of the other ingredients. The use of a swelling agent will aid in the crosslinking of the polymer below the surface whenever acid, alkoxide or alcohol are present. Suitable agents are 1,2,4-trichlorobenzene, methylene chloride and chloroform.

Process steps carried out much above ambient temperatures should be done in the absence of oxygen to avoid oxidation of the process ingredients. If alkoxides or concentrated dehydrating acids are employed large amounts of water should be avoided. It is therefore often convenient to carry out the process under an inert atmosphere, for example nitrogen or argon.

If the process is carried out using the optional first step, the polymer so produced may be formed into parts

before performing the second step. For example, for polymers that can be melt processed below about 200°C, typical melt processing techniques may be employed. For polymers that cannot be melt processed below about 200°C, polymer powder may be treated in the first step, and the resulting powder formed into parts by compression and heating before crosslinking occurs. After the second step of the process the polymer should be of the final part configuration, such as a molding, extrusion, composite part, fiber, film, etc. Thus parts of the desired final configuration need only be treated by the second step in the presence of alcohol and/or alkoxide to become crosslinked. Parts that had undergone the first step could be formed into their final shapes before treatment in the second step.

Parts crosslinked by the instant process, such as moldings, fibers and films are especially useful in environments with harsh chemical exposure such as acids. Such uses include filter for furnaces burning high sulfur content coals, protective clothing and engineering parts. They are also particularly useful where shape retention at high temperatures is critical.

In some of the following examples PEEK polymer, grade 380, available from ICI Americas, Wilmington, DE, is used. PEKK polymer was made according to the procedure of U.S. Patent 4,816,556. In the following examples, the polymers are tested for solubility in solvents which would normally dissolve them. If the polymer is insoluble, it is deemed crosslinked.

EXAMPLE 1

PEKK polymer (0.9 g) was heated with 0.14 g (33 mole %) of p-xylylene glycol in a nitrogen atmosphere for 15 min at 360°C. The polymer softened slightly, but did not melt. It was insoluble in hexafluoroisopropyl alcohol at room temperature and sulfuric acid at 100°C, indicating it was crosslinked. Untreated PEKK polymer was molten at 360°C and was soluble in both hexafluoroisopropyl alcohol and 100°C sulfuric acid.

EXAMPLE 2

Example 1 was repeated, except that temperatures below the melting point of PEKK polymer were used. Polymers treated at 250 and 200°C were insoluble in hexafluoroisopropyl alcohol. Polymer treated at 150°C was soluble. All three polymers were insoluble in sulfuric acid, both at room temperature and at 100°C. This result indicates that even at the lowest temperature used, which is near the PEKK $T_g$ of ~160-170°C, there was sufficient reaction that the sulfuric acid could cause crosslinking to occur.

EXAMPLE 3

PEEK polymer (0.86 g) was heated with 0.04 g (10 mole %) of p-xylylene glycol in a nitrogen atmosphere for 15 min at 360°C. The polymer gelled, and did not melt. It was insoluble in a 50:50 volume mixture of 1,2,4-trichlorobenzene and phenol at 180°C, indicating it was crosslinked. Untreated PEEK polymer dissolved in this solvent.

EXAMPLE 4

PEKK polymer (15 g) was heated with 0.44 g (10 mole %) of neopentyl alcohol (boiling point 113-114°C) at 350°C under autogenous pressure in a sealed vessel for 15 min. The resulting glassy solid was insoluble and swelled in hexafluoroisopropyl alcohol.

EXAMPLE 5

PEKK film (0.44 g) was heated with 9.1 g (10,000 mole %) ethylene glycol (boiling point 196-198°C) and 10 g 1,3,5-trichlorobenzene as swelling agent under autogenous pressure in a sealed vessel at 250°C for 1 hr. The resulting opacified film was insoluble in sulfuric acid, hexafluoroisopropyl alcohol, and a 50:50 volume mixture of 180°C 1,2,4-trichlorobenzene and phenol.

EXAMPLE 6

A small section of a PEKK tensile bar (0.67 g) was heated with 14.3 g of methanol (20,000 mole %) and 16 g of 1,3,5-trichlorobenzene under autogenous pressure in a sealed vessel at 250°C for 1 hr. The resulting tensile bar section was insoluble in 100°C sulfuric acid, room temperature hexafluoroisopropyl alcohol, and 180°C 50:50 volume mixture of 1,2,4-trichlorobenzene and phenol.

EXAMPLE 7

PEKK yarn drawn at 2.4x draw ratio (0.73 g) was heated with 15.6 g of methanol (20,000 mole %) and 41.3 g of methylene chloride (20,000 mole %) under autogenous pressure in a sealed vessel at 230°C for 2 hr. The resulting yarn was insoluble in 180°C 50:50 volume mixture of 1,2,4-trichlorobenzene and phenol and in 100°C sulfuric acid.

EXAMPLE 8

PEKK polymer (10 g) was heated with stirring with 0.1 g sodium hydroxide in 100 cc of boiling 1-heptanol for 1 hr. The boiling temperature is 176°C, which is above the PEKK $T_g$ of ~160-170°C. The cooled suspension was filtered, and the solid polymer washed with 1-heptanol and then 2-propanol. It was soluble in hexafluoroisopropyl alcohol, indicating that it was not crosslinked. It was insoluble in sulfuric acid, indicating that it had become crosslinked by that solvent. The washed and air-dried polymer was heated in a nitrogen atmosphere at 350°C for 15 min. The polymer melted and then solidified, indicating gelation. The resulting gelled polymer was insoluble in hexafluoroisopropyl alcohol at room temperature and in sulfuric acid at 100°C, indicating that the heating had caused it to crosslink.

EXAMPLE 9

A film was pressed at 360°C and 20,000 lb. for 3 min from the sodium hydroxide/1-heptanol treated polymer of Example 8. The resulting colorless, creasable film was insoluble and swelled in hexafluoro-isopropyl alcohol. Film made the same way from untreated polymer dissolved in this solvent. The crosslinked film was heated in the film press for an additional period of time, and swelling ratios ($q_m$) and elongation in a thermomechanical analyzer (TMA) were measured, with these results:

| Total Heating Time (min.) | $q_m$ | Elongation (%) in TMA at 180°C |
|---|---|---|
| 3 | 12 | 47 |
| 8 . | 7 | 13 |
| uncrosslinked control | ∞ | >200 |

EXAMPLE 10

PEKK yarn drawn at 2.4x draw ratio (0.54 g) was heated in a solution of 0.03 g of sodium hydroxide in 30 cc of 1-heptanol under reflux in a nitrogen atmosphere for 1 hr. The yarn was removed from the solution, washed with 1-heptanol, then 2-propanol, then water, then methanol, and let dry in the air. About one-third of the yarn was then immersed in sulfuric acid, whereupon it turned a very deep, almost black, red. This suspension was heated at 100°C for 1 hr and then left at room temperature overnight. The yarn was removed from the sulfuric acid, washed with fresh sulfuric acid, then water until the washings were neutral to pH paper, and let dry in the air. The resulting tan fibrids were insoluble in a 50:50 volume mixture of 1,2,4-trichlorobenzene and phenol at 180°C for 2 hr, and were thus crosslinked.

EXAMPLE 11

A small amount of the alkali-treated polymer of Example 8 (not heated to 350°C) was immersed in sulfuric acid at room temperature for ~5 min. On contact with the sulfuric acid, it immediately turned the same color as in Example 10. The suspension was filtered, and the polymer washed and dried on the filter as in Example 10. The resulting slightly off-white (original color) polymer was tested as in Example 10, and found to be crosslinked.

EXAMPLE 12

A suspension of 1.2 g of PEKK polymer in 12 cc of ethylene glycol was heated at the boil (~197°C) under

reflux in a nitrogen atmosphere for 1 hr. There was no visible change in the polymer. The suspension was filtered, and the polymer washed on the filter with ethylene glycol, 2-propanol, and methanol, and let dry on the filter. It was soluble when tested as in Example 11, indicating that it was not crosslinked. This polymer was then heated at 360°C for 15 min. It melted and then gelled. After this heating, it was insoluble, indicating that it was crosslinked. A film pressed from the unheated polymer at 360°C for 15 min. had a $q_m$ of 27 in the solvent of Example 10.

Although preferred embodiments of the invention have been described hereinabove, it is to be understood that there is no intention to limit the invention to the precise constructions herein disclosed, and it is to be further understood that the right is reserved to all changes coming within the scope of the invention as defined by the appended claims.

## Claims

1. A process for crosslinking a diaryl ketone containing polymer, comprising,

   an optional first step of contacting a diaryl ketone containing polymer with a primary or secondary alcohol and/or alkoxide, at a first temperature of about 50°C to about 200°C; and

   a second step of heating said diaryl ketone containing polymer at a second temperature of about 200°C or more, or contacting said polymer with a strong dehydrating acid;

   provided that:

   said first and said second temperatures are about or above the glass transition temperature of said polymer;

   when alkoxide is not present, said first temperature is about 150°C to about 200°C;

   when said strong acid is used in said second step, said first step must be carried out; and

   when said second step is carried out in the absence of said acid, and said optional first step has not been performed, said second step must be done with said polymer contacting said alcohol and/or said alkoxide.

2. The process as recited in Claim 1 wherein said first step is done, and said second step is done in the absence of alcohol, alkoxide and acid.

3. The process as recited in Claim 1 wherein said first step is omitted, and said second step is done with said polymer contacting said alcohol and/or alkoxide.

4. The process as recited in Claim 1 wherein said first step is done, and said second step is done while said polymer is contacting said acid.

5. The process as recited in Claim 1 or Claim 2 or Claim 3 or Claim 4 wherein said polymer is PEEK or PEKK.

6. The process as recited in Claim 2 or Claim 3 wherein said second step is carried out at a temperature of about 230°C to about 350°C.

7. The process as recited in Claim 5 wherein said acid is selected from the group consisting of sulfuric acid, phosphoric acid, polyphosphoric acid, p-toluenesulfonic acid, methanesulfonic acid and trifluoromethanesulfonic acid.

8. The process as recited in Claim 7 wherein said acid is sulfuric acid.

9. The process as recited in Claim 1 or Claim 3 wherein the ratio of said alcohol plus said alkoxide to said polymer in said second step is about 0.0001 to about 1 equivalent per gram of said polymer.

10. The process as recited in Claim 9 wherein said ratio is about 0.0002 to about 0.5.

11. The process as recited in Claim 1 or Claim 2 or Claim 4 wherein the ratio of said alcohol plus said alkoxide to said polymer in said first step is about 0.05 to about 1.0 equivalents per gram of said polymer.

12. The process as recited in Claim 1 wherein said alcohol is selected from the group consisting of methanol, ethanol, n-propanol, i-propanol, n-butanol, 2-butanol, 2-methyl-1-propanol, xylylene glycol (o-,m- and p-isomers), neopentyl alcohol, 1-heptanol, ethylene glycol, benzyl alcohol, 1,4-butanediol, and propylene

glycol, penterythritol, trimethylol propane, 1,3-propanediol, 1,5-pentanediol, 1,6-hexanediol, cyclohexanedimethanol, and 2,2-dimethyl-1,3-propanediol and wherein said alkoxide is derived from any of the alcohols selected from the groups.

**13.** The process as recited in Claim 12 wherein said polymer is PEKK or PEEK.

**14.** The process as recited in Claim 1 wherein said polymer is in the form of a fiber.

**15.** The process as recited in Claim 1 wherein said polymer is in the form of a film.

**16.** The process as recited in Claim 1 wherein said polymer is in the form of a molded part, extrusion or composite part.

**17.** The process as recited in claim 1 or Claim 4, or Claim 5 wherein a swelling agent is present.

**18.** The process as recited in Claim 2 wherein a swelling agent is present in the first step.

**19.** The process as recited in Claim 3 wherein a swelling agent is present in said second step.

**20.** Crosslinked diaryl ketone containing polymer obtainable by the process as recited in Claim 1 or Claim 2 or Claim 3 or Claim 4 or Claim 5 or Claim 12 or Claim 13.

## Patentansprüche

**1.** Verfahren zur Vernetzung eines diarylketonhaltigen Polymeren, umfassend
eine frei wählbare erste Stufe, während der ein diarylketonhaltiges Polymeres mit einem primären oder sekundären Alkohol und/oder Alkoxid bei einer ersten Temperatur von etwa 50 °C bis etwa 200 °C zusammengebracht wird; und
eine zweite Stufe, während der das genannte diarylketonhaltigen Polymere bei einer zweiten Temperatur von etwa 200 °C oder höher erhitzt oder das genannte Polymere mit einer starken entwässernden Säure zusammengebracht wird; mit der Maßgabe, daß:
die genannten ersten und zweiten Temperaturen bei etwa oder oberhalb der Glasübergangstemperatur des genannten Polymeren liegen;
wenn das Alkoxid nicht vorhanden ist, die genannte erste Temperatur etwa 150 °C bis etwa 200 °C beträgt;
wenn die genannte starke Säure während der genannten zweiten Stufe verwendet wird, die genannte erste Stufe durchgeführt werden muß; und
wenn die genannte zweite Stufe in Abwesenheit der genannten Säure durchgeführt wird, und die genannte frei wählbare erste Stufe nicht durchgeführt worden ist, die genannte zweite Stufe mit den genannten Polymeren unter Kontakt mit dem genannten Alkohol und/oder dem genannten Alkoxid durchgeführt werden muß.

**2.** Verfahren nach Anspruch 1, bei dem die genannte erste Stufe durchgeführt wird und die genannte zweite Stufe in Abwesenheit von Alkohol, Alkoxid und Säure durchgeführt wird.

**3.** Verfahren nach Anspruch 1, bei dem die genannte erste Stufe entfällt und die genannte zweite Stufe mit dem genannten Polymeren unter Kontakt mit dem genannten Alkohol und/oder Alkoxid durchgeführt wird.

**4.** Verfahren nach Anspruch 1, bei dem die genannte erste Stufe durchgeführt wird und die genannte zweite Stufe durchgeführt wird, während das genannte Polymere sich in Kontakt mit der genannten Säure befindet.

**5.** Verfahren nach Anspruch 1 oder Anspruch 2 oder Anspruch 3 oder Anspruch 4, bei dem das genannte Polymere PEEK oder PEKK ist.

**6.** Verfahren nach Anspruch 2 oder Anspruch 3, bei dem die genannte zweite Stufe bei einer Temperatur von etwa 230 °C bis etwa 350 °C durchgeführt wird.

**7.** Verfahren nach Anspruch 5, bei dem die genannte Säure aus der Gruppe ausgewählt wird, bestehend

aus Schwefelsäure, Phosphorsäure, Polyphosphorsäure, p-Toluolsulfonsäure, Methansulfonsäure und Trifluormethansulfonsäure.

8. Verfahren nach Anspruch 7, bei dem die genannte Säure Schwefelsäure ist.

9. Verfahren nach Anspruch 1 oder Anspruch 3, bei dem das Verhältnis des genannten Alkohols plus des genannten Alkoxids zu dem genannten Polymeren in der genannten zweiten Stufe etwa 0,0001 bis etwa 1 Äquivalent pro Gramm des genannten Polymeren beträgt.

10. Verfahren nach Anspruch 9, bei dem das genannte Verhältnis etwa 0,0002 bis etwa 0,5 beträgt.

11. Verfahren nach Anspruch 1 oder Anspruch 2 oder Anspruch 4, bei dem das Verhältnis des genannten Alkohols plus des genannten Alkoxids zu dem genannten Polymeren in der genannten ersten Stufe etwa 0,05 bis etwa 1,0 Äquivalent pro Gramm des genannten Polymeren beträgt.

12. Verfahren nach Anspruch 1, bei dem der genannte Alkohol ausgewählt wird aus der Gruppe, bestehend aus Methanol, Ethanol, n-Propanol, i-Propanol, n-Butanol, 2-Butanol, 2-Methyl-1-propanol, Xylol (o-, m- und p-Isomeren), Glycol, Neopentylalkohol, 1-Heptanol, Ethylenglycol, Benzylalkohol, 1,4-Butandiol und Propylenglycol, Pentaerythrit, Trimethylolpropan, 1,3-Propandiol, 1,5-Pentandiol, 1,6-Hexandiol, Cyclohexandimethanol und 2,2-Dimethyl-1,3-propandiol und worin das genannte Alkoxid von einem der aus der Gruppe ausgewählten Alkohole abstammt.

13. Verfahren nach Anspruch 12, bei dem das genannte Polymere PEKK oder PEEK ist.

14. Verfahren nach Anspruch 1, bei dem das genannte Polymere in Form einer Faser vorliegt.

15. Verfahren nach Anspruch 1, bei dem das genannte Polymere in Form einer Folie vorliegt.

16. Verfahren nach Anspruch 1, bei dem das genannte Polymere in Form eines geformten Teils, extrudierten Teils oder Verbundteils vorliegt.

17. Verfahren nach Anspruch 1 oder Anspruch 4 oder Anspruch 5, bei dem ein Quellmittel vorhanden ist.

18. Verfahren nach Anspruch 2, bei dem in der ersten Stufe ein Quellmittel vorhanden ist.

19. Verfahren nach Anspruch 3, bei dem in der genannten zweiten Stufe ein Quellmittel vorhanden ist.

20. Vernetztes diarylketonhaltiges Polymeres, das durch das Verfahren nach Anspruch 1 oder Anspruch 2 oder Anspruch 3 oder Anspruch 4 oder Anspruch 5 oder Anspruch 12 oder Anspruch 13 zugänglich ist.

## Revendications

1. Un procédé pour la réticulation d'un polymère contenant une diarylcétone, comprenant :

une première opération, facultative, consistant à mettre en contact un polymère contenant une diarylcétone avec un alcool et/ou un alcoolate primaire ou secondaire, à une première température d'environ 50 °C à environ 200 °C ; et

une deuxième opération consistant à chauffer ledit polymère contenant une diarylcétone à une deuxième température d'environ 200 °C ou plus, ou à mettre en contact ledit polymère avec un acide déshydratant fort ;

étant entendu que :

lesdites première et deuxième températures sont voisines de ou supérieures à la température de transition vitreuse dudit polymère ;

en l'absence d'alcoolate, ladite première température est d'environ 150 °C à environ 200 °C ;

lorsque ledit acide fort est utilisé dans ladite deuxième opération, ladite première opération doit être effectuée ; et

lorsque ladite deuxième opération est effectuée en l'absence dudit acide, et que ladite première opération facultative n'a pas été effectuée, ladite deuxième opération doit être effectuée avec mise en contact dudit polymère avec ledit alcool et/ou ledit alcoolate.

2. Le procédé de la revendication 1 dans lequel ladite première opération est effectuée, et ladite deuxième opération est effectuée en l'absence d'alcool, d'alcoolate et d'acide.

3. Le procédé de la revendication 1 dans lequel ladite première opération est omise, et ladite deuxième opération est effectuée avec mise en contact dudit polymère avec ledit alcool et/ou avec ledit alcoolate.

4. Le procédé de la revendication 1 dans lequel ladite première opération est effectuée, et ladite deuxième opération est effectuée pendant que ledit polymère est en contact avec ledit acide.

5. Le procédé de la revendication 1 ou de la revendication 2 ou de la revendication 3 ou de la revendication 4 dans lequel ledit polymère est du PEEK (poly[éther-éther-cétone])ou du PEKK (poly[éther-cétone-cétone]).

6. Le procédé de la revendication 2 ou de la revendication 3 dans lequel ladite deuxième opération est mise en oeuvre à une température d'environ 230 °C à environ 350 °C.

7. Le procédé de la revendication 5 dans lequel ledit acide est choisi dans le groupe formé par l'acide sulfurique, l'acide phosphorique, l'acide polyphosphorique, l'acide p-toluènesulfonique, l'acide méthanesulfonique et l'acide trifluorométhanesulfonique.

8. Le procédé de la revendication 7 dans lequel ledit acide est l'acide sulfurique.

9. Le procédé de la revendication 1 ou de la revendication 3 dans lequel le rapport dudit alcool plus ledit alcoolate audit polymère dans ladite deuxième opération est d'environ 0,0001 à environ 1 équivalent par gramme dudit polymère.

10. Le procédé de la revendication 9 dans lequel ledit rapport est d'environ 0,0002 à environ 0,5.

11. Le procédé de la revendication 1 ou de la revendication 2 ou de la revendication 4 dans lequel le rapport dudit alcool plus ledit alcoolate audit polymère dans ladite première opération est d'environ 0,05 à environ 1,0 équivalent par gramme dudit polymère.

12. Le procédé de la revendication 1 dans lequel ledit alcool est choisi dans le groupe formé par le méthanol, l'éthanol, le n-propanol, l'isopropanol, le n-butanol, le 2-butanol, le 2-méthyl-1-propanol, le xylylène glycol (isomères o-, m- et p-), l'alcool néopentylique, le 1-heptanol, l'éthylène glycol, l'alcool benzylique, le 1,4-butanediol, et le propylène glycol, le pentaérythritol, le triméthylolpropane, le 1,3-propanediol, le 1,5-propanediol, le 1,6-hexanediol, le cyclohexanediméthanol et le 2,2-diméthyl-1,3-propanediol, et dans lequel ledit alcoolate dérive de l'un quelconque des alcools choisis dans le groupe.

13. Le procédé de la revendication 12 dans lequel ledit polymère est du PEEK (poly[éther-éther-cétone]) ou du PEKK (poly[éther-cétone-cétone]).

14. Le procédé de la revendication 1 dans lequel ledit polymère a la forme d'une fibre.

15. Le procédé de la revendication 1 dans lequel ledit polymère a la forme d'un film.

16. Le procédé de la revendication 1 dans lequel ledit polymère a la forme d'une pièce moulée, d'une pièce extrudée ou d'une pièce composite.

17. Le procédé de la revendication 1 ou de la revendication 4, ou de la revendication 5 dans lequel un agent gonflant est présent.

18. Le procédé de la revendication 2 dans lequel un agent gonflant est présent dans la première opération.

19. Le procédé de la revendication 3 dans lequel un agent gonflant est présent dans ladite deuxième opération.

20. Polymère contenant une diarylcétone réticulé pouvant être obtenu par le procédé de la revendication 1 ou de la revendication 2 ou de la revendication 3 ou de la revendication 4 ou de la revendication 5 ou de la revendication 12 ou de la revendication 13.